Europäisches Patentamt

European Patent Office

Office européen des brevets

(19)

(11) Veröffentlichungsnummer: **0 290 732**
**A1**

## (12) EUROPÄISCHE PATENTANMELDUNG

(21) Anmeldenummer: **88103440.9**

(22) Anmeldetag: **05.03.88**

(51) Int. Cl.⁴: **H01S 3/097**

(30) Priorität: **11.05.87 CH 1787/87**

(43) Veröffentlichungstag der Anmeldung:
**17.11.88 Patentblatt 88/46**

(84) Benannte Vertragsstaaten:
**AT BE DE ES FR GB IT NL SE**

(71) Anmelder: **Elektro-Apparatebau Olten AG**
**Tannwaldstrasse 88**
**CH-4600 Olten(CH)**

(72) Erfinder: **Plüss, Martin**
**Lerchmattstrasse 6**
**CH-4663 Aarburg(CH)**
Erfinder: **Baumgartner, Stefan**
**Kreuzfeldstrasse 653**
**CH-4616 Kappel(CH)**
Erfinder: **Lüchinger, Rudolf**
**Strickweg 2**
**CH-4612 Wangen(CH)**
Erfinder: **Weber, Felix**
**Unterführungsstrasse 30**
**CH-4600 Olten(CH)**
Erfinder: **Indalizio, Dario**
**Adlerfeldstrasse 67**
**CH-4402 Frenkendorf(CH)**
Erfinder: **Lüscher, Eduard**
**Weiermatt 16**
**CH-4814 Bottenwil(CH)**

(74) Vertreter: **Fillinger, Peter, Dr.**
**Rütistrasse 1a**
**CH-5400 Baden(CH)**

(54) CO2-Laser.

(57) Der $CO_2$-Laser ist mit einer Strahlungsquelle (1) und einer eine Spannungsquelle (4), eine Impedanz (LS) und einen Gleichrichter (6) aufweisenden Stromversorgung (2) versehen. Zur Verbesserung des Wirkungsgrades ist vorgesehen, dass die Stromversorgung (2) einen Resonanzkreis (5) und als Spannungsquelle einen Frequenzgenerator (4) mit im Überresonanzbereich wählbarer Frequenz aufweist. Im Überresonanzbereich, in dem mit zunehmender Frequenz die Stromstärke abnimmt, ist die Impedanz des Resonanzkreises (5) induktiv und damit verlustfrei.

Fig. 1

## CO$_2$-Laser

Die vorliegende Erfindung bezieht sich auf einen CO$_2$-Laser mit einer Strahlungsquelle und einer eine Spannungsquelle, eine Impedanz und einen Gleichrichter aufweisenden Stromversorgung.

Laser dieser Art mit einem Hochspannungsnetzgerät als Spannungsquelle sind bekannt. Ihre Stromversorgung weist einen ohmschen Balast auf, der mit Bezug auf die Strahlungsquelle derart dimensioniert ist, dass die in der Stromversorgung resultierende Stromstärke mit zunehmender Spannung ansteigt. Hierdurch wird einerseits der Laser regelbar; anderseits muss aber im ohmschen Balast auf unwirtschaftliche Weise Energie verheizt werden.

Die vorliegende Erfindung stellt sich die Aufgabe, an einem Laser der genannten Art den Wirkungsgrad zu verbessern.

Erfindungsgemäss wird diese Aufgabe dadurch gelöst, dass die Stromversorgung einen Resonanzkreis und als Spannungsquelle einen Frequenzgenerator mit wählbarer Frequenz im Überresonanzbereich aufweist, und dass im Überresonanzbereich in dem mit zunehmender Frequenz die Stromstärke abnimmt, die Impedanz des Resonanzkreises induktiv ist.

Die Erfindung hat den Vorteil einer guten Regeldynamik, woraus sich der weitere Vorteil ergibt, dass der Laser ohne zusätzliche Elemente mit dieser Stromversorgung sowohl eingeschaltet als auch gepulst betrieben werden kann.

Ist gemäss Anspruch 2 zwischen der Strahlungsquelle und dem Gleichrichter ein Filter angeordnet, so kann dieser Filter, je höher die Frequenz des Überresonanzbereichs gewählt wird umso kleiner und kostengünstiger ausgeführt werden.

Anhand der beiliegenden schematischen Zeichnung wird die Erfindung beispielsweise erläutert. Es zeigen:

Fig. 1 ein Schema eines Ausführungsbeispiels eines Lasers und

Fig. 2 eine Variante des Beispiels nach Fig. 1, wobei die Strahlungsquelle in serieller Anordnung mehrere Laserstrecken aufweist und die Polarität auch umgekehrt sein kann.

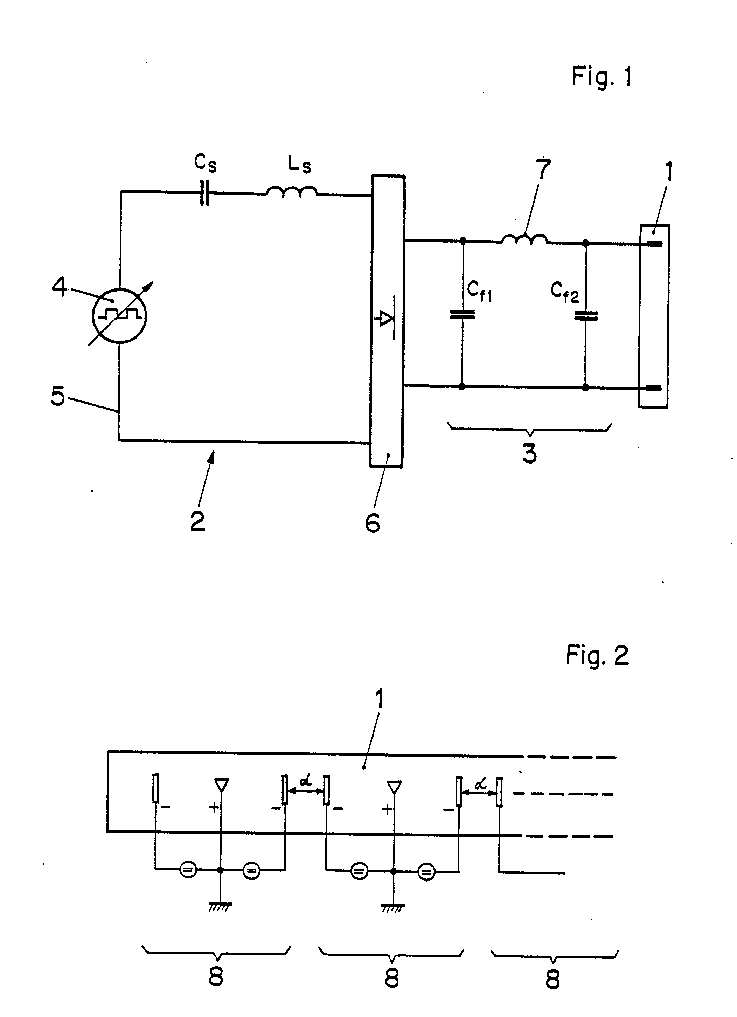

Der Laser nach Fig. 1 besteht aus einer Kohlendioxydstrahlungsquelle 1 und einer Stromversorgung 2 zwischen denen ein passiver Filter 3 angeordnet ist. Die Stromversorgung 2 ihrerseits weist einen Frequenzgenerator 4 mit konstanter Spannung und verstellbarer Frequenz sowie einen Schwingkreis 5 mit einer Induktivität $L_S$ und einer Kapazität $C_S$ auf. Zwischen dem Schwingkreis 5 und dem Filter 3 ist ein Gleichrichter 6 oder eine Spannungsvervielfacherschaltung mit oder ohne Transformator vorhanden, wobei der Filter 3 durch die Kapazitäten $C_{f1}$ und $C_{f2}$ sowie durch eine Drossel 7 gebildet ist. Der Betrieb des Lasers erfolgt im Überresonanzbereich des Schwingkreises 5, so dass mit zunehmender Frequenz der Strom abnimmt. Weiter ist die Resonanzfrequenz möglichst gross und mindestens 4'000 Hz vorzugsweise 40 kHz und mehr. Bei dieser Stromversorgung kann der Laser wegen der guten Regeldynamik des kleinen Filters 3 bis zu ca 1/3 der Frequenz des Frequenzgenerators 4 gepulst betrieben werden.

Sind entsprechend der Fig. 2 in der Strahlungsquelle 1 mehrere Laserstrecken 8 in Serie angeordnet und die Speisung dieser Einzelstrecken für einen Master-Slave-Betrieb ausgelegt, können - wegen der guten Regeldynamik - die benachbarten Elektroden von zwei aufeinander folgenden Laserstrecken 8 nahe beieinander liegen. Potentialänderungen an den Elektroden erfolgen praktisch ohne zeitliche Verzögerung, was auch bei geringem Abstand "d" zwischen benachbarten Elektroden einen Durchschlag verhindert. Dadurch kann die Länge der Strahlungsquelle insgesamt klein gehalten werden.

## Ansprüche

1. CO$_2$-Laser mit einer Strahlungsquelle (1) und einer eine Spannungsquelle (4), eine Impedanz und einen Gleichrichter (6) aufweisenden Stromversorgung (2), dadurch gekennzeichnet, dass die Stromversorgung (2) einen Resonanzkreis (5) und als Spannungsquelle (4) einen Frequenzgenerator mit im Überresonanzbereich wählbarer Frequenz aufweist, und dass im Überresonanzbereich, in dem mit zunehmender Frequenz die Stromstärke abnimmt, die Impedanz des Resonanzkreises (5) induktiv und damit verlustfrei ist.

2. CO$_2$-Laser nach Anspruch 1, dadurch gekennzeichnet, dass zwischen der Strahlungsquelle (1) und dem Gleichrichter (6) ein (passiver) Filter (3) angeordnet ist.

3. CO$_2$-Laser nach Anspruch 2, dadurch gekennzeichnet, dass die Frequenz des Überresonanzbereichs mindestens 4'000 Hz beträgt.

4. CO$_2$-Laser nach einem der Ansprüche 1 bis 3, dadurch gekennzeichnet, dass die Strahlungsquelle (1) in mehrere, seriell angeordnete Laserstrecken (8) unterteilt ist, und dass die Stromversorgung (2) dieser Laserstrecken (8) für einen Master-Slave-Betrieb ausgelegt ist.

0 290 732

Fig. 1

$C_s$  $L_s$

$C_{f1}$  $C_{f2}$

7  1

4

5

2  6  3

Fig. 2

1

$\alpha$  $\alpha$

8  8  8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 043 454 (HUGHES AIRCRAFT) * Seite 9, Zeilen 6-23; Figuren 1,4 * --- | 1 | H 01 S 3/097 |
| A | EP-A-0 003 280 (HUGHES AIRCRAFT) * Figur 1 * --- | 2 | |
| A | WO-A-8 100 330 (HUGHES AIRCRAFT) * Figur 1 * ----- | 1 | |

RECHERCHIERTE SACHGEBIETE (Int. Cl.4)

H 01 S

Der vorliegende Recherchenbericht wurde für alle Patentansprüche erstellt

| Recherchenort | Abschlußdatum der Recherche | Prüfer |
|---|---|---|
| DEN HAAG | 08-08-1988 | MALIC K. |